Europäisches Patentamt

European Patent Office

Office européen des brevets

(19)

(11)    EP 1 011 839 B1

(12)    FASCICULE DE BREVET EUROPEEN

(45) Date de publication et mention
de la délivrance du brevet:
**06.04.2005   Bulletin 2005/14**

(51) Int Cl.7: **B01D 15/00**, B01D 53/46

(21) Numéro de dépôt: **98939702.1**

(22) Date de dépôt: **17.07.1998**

(86) Numéro de dépôt international:
**PCT/FR1998/001569**

(87) Numéro de publication internationale:
**WO 1999/004878 (04.02.1999 Gazette 1999/05)**

(54) **PROCEDE D'ADSORPTION DE COMPOSES ORGANOPHOSPHORES CONTENUS DANS UN LIQUIDE**

VERFAHREN ZUR ADSORPTION VON IN EINER FLÜSSIGKEIT ENTHALTENEN ORGANOPHOSPHORVERBINDUNGEN

METHOD FOR ADSORBING ORGANOPHOSPHORUS COMPOUNDS CONTAINED IN A LIQUID

(84) Etats contractants désignés:
**BE DE ES FR GB IT NL**

(30) Priorité:  **24.07.1997  FR 9709499**

(43) Date de publication de la demande:
**28.06.2000   Bulletin 2000/26**

(73) Titulaire: **RHODIA CHIMIE**
**92408 Courbevoie Cédex (FR)**

(72) Inventeurs:
• **NEDEZ, Christophe**
**F-30340 Salindres (FR)**
• **LAUCHER, Dominique**
**F-68190 Ensisheim (FR)**

(74) Mandataire: **Esson, Jean-Pierre et al**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**EP-A- 0 723 954          WO-A- 97/12672**
**DE-A- 2 221 031          FR-A- 2 705 342**
**GB-A- 766 732            GB-B- 766 732**
**US-A- 2 875 847          US-A- 4 842 746**
**US-A- 5 689 038**

• **CHEMICAL ABSTRACTS, vol. 127, no. 2, 14 juillet 1997 Columbus, Ohio, US; abstract no. 22919, NAKANO, MIKI ET AL: "Poisoning-resistant pretreating agents and treatment of factory waste gases using them" XP002061650 & JP 09 085087 A (NITSUKI YUNIBAASARU K. K., JAPAN)**
• **CHEMICAL ABSTRACTS, vol. 109, no. 14, 3 octobre 1988 Columbus, Ohio, US; abstract no. 116690, KAMATA, SATSUO ET AL: "Study on adsorbed species on metal-oxide surfaces by inelastic electron tunneling spectroscopy. II. Organophosphorus compounds" XP002061651 & KENKYU HOKOKU - ASAHI GARASU KOGYO GIJUTSU SHOREIKAI (1987), 51, 263-9 CODEN: AGKGAA;ISSN: 0365-2599,1987,**
• **CHEMICAL ABSTRACTS, vol. 113, no. 18, 29 octobre 1990 Columbus, Ohio, US; abstract no. 158000, GRAATZEL, CAROLE K. ET AL: "Decomposition of organophosphorus compounds on photoactivated titanium dioxide surfaces" XP002061652 & J. MOL. CATAL. (1990), 60(3), 375-87 CODEN: JMCADS;ISSN: 0304-5102,1990,**
• **MING-CHUN L ET AL: "Adsorption characteristics of dichlorvos onto hydrous titanium dioxide surface" WATER RESEARCH, vol. 7, no. 30, juillet 1996, page 1670-1676 XP004034904**

EP 1 011 839 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé d'élimination des composés organophosphorés contenus dans une charge industrielle.

Il est connu d'utiliser les composés organophosphorés en tant que catalyseurs, notamment en tant que ligands de catalyseurs. Or, au cours de l'étape mettant en oeuvre ces catalyseurs, il est fréquent d'observer leur dégradation partielle, si bien que des traces de ces catalyseurs sont présentes dans les produits de réaction. C'est le cas par exemple lors de la réaction de dimérisation de l'acrylonitrile en 1,4-butènedinitrile, comme décrit dans le brevet US-A-4.952.541.

Selon l'utilisation ultérieure de ces produits, il est souvent préférable d'éliminer les résidus de catalyseurs qu'ils contiennent. En effet, ces résidus peuvent, par exemple, empoisonner et donc désactiver les catalyseurs d'étapes réactionnelles ultérieures.

Il peut être également recommandé d'éliminer ces résidus de manière à ce qu'ils ne génèrent pas le dégagement, dans l'atmosphère ou dans les eaux et/ou solvants résiduaires, de composés soumis à des contraintes environnementales.

Il est également connu d'utiliser les composés organophosphorés en tant qu'extractants lors des opérations purificatrices d'extraction liquide-liquide : le produit à purifier, initialement en solution aqueuse avec les impuretés, est transféré dans le solvant extractant à base de ces composés organophosphorés tandis que les impuretés restent en phase aqueuse. On obtient ainsi un produit purifié en phase organique qui est ensuite désextrait en phase aqueuse. Lors de cette désextraction, une partie de la phase organique à base d'organophosphorés peut passer en phase aqueuse. Le produit obtenu, bien que purifié, contient alors des traces indésirables d'organophosphorés.

Un moyen classique pour purifier les produits consiste à distiller le milieu contenant les résidus phosphorés, cependant, une telle opération est coûteuse tant en investissement qu'en fonctionnement. De plus, elle n'est pas toujours possible, et enfin, une décomposition des produits à purifier peut parfois être observée.

Dans certains cas, on peut réaliser une extraction liquide-liquide supplémentaire, cependant le solvant enrichi en composés phosphorés doit ensuite être traité, avant d'être rejeté ou réutilisé.

Il a également été proposé d'utiliser des résines échangeuses d'ions, comme par exemple dans le brevet GB-A-2 212 155. Ces résines présentent l'inconvénient d'être chères ainsi que de présenter une acidité qui peut entraîner des dégradations parasites.

Dans le brevet US-A-4.952.541, les composés phosphorés sont éliminés par mise en contact du milieu réactionnel avec un agent oxydant. Cependant, selon la nature du milieu à traiter, ce dernier peut être dégradé par l'agent oxydant.

Le traitement d'effluents industriels notamment gazeux par des absorbants comme l'alumine pour éliminer certains produits organiques lourds a été décrit dans la demande de brevet japonais JP9085087. Le traitement décrit n'est pas sélectif entre les différents composés organiques.

D'autres documents tels que US 4842746 décrivent un procédé de décontamination de solvants utilisés pour l'élimination des produits toxiques utilisés comme armes chimiques tels que le sarin. Les solvants ne contiennent pas de composés nitriles et les composés organophosphorés utilisés notamment dans le domaine de la catalyse ont une structure très différente.

Un but de la présente invention est donc de proposer un nouveau procédé d'élimination des composés organophosphorés contenus dans un milieu liquide contenant des composés nitriles et/ou dinitriles.

Un autre but est de proposer un tel procédé ne dégradant pas un milieu liquide.

Dans ce but, l'invention concerne un procédé d'élimination de composés organophosphorés, trivalents et/ou pentavalents et comprenant au moins un atome de carbone, contenus dans un liquide contenant des composés nitriles et/ou dinitriles provenant de la réaction d'hyrocyanation du butadiène en présence de catalyseurs phosphorés dans lequel on met en contact ledit gaz ou liquide avec de l'alumine.

Le procédé de l'invention consiste donc à mettre en contact les composés organophosphorés avec de l'alumine. La réaction mise en jeu est une réaction d'adsorption et/ou de captation.

Selon un premier mode, le procédé met en oeuvre un adsorbant uniquement à base d'alumine.

De préférence, l'invention exclut les procédés d'élimination à l'aide d'alumine des composés organophosphorés contenus dans un gaz ou un liquide, pour lesquels les composés organophosphorés sont des phosphites et le gaz ou liquide est une charge de monomères éthyléniquement insaturés, notamment les procédés définis dans la demande de brevet français FR 2 758 552 A.

L'alumine peut se présenter sous des formes diverses, elle peut, par exemple, se présenter sous la forme de poudres, billes, d'extrudés, de concassés ou de monolithes. Si l'alumine utilisée se présente sous forme de billes, ces billes peuvent être issues d'une mise en forme par technologie tournante ou par coagulation en gouttes (dite oil-drop).

L'alumine utilisée présente, en général, une surface spécifique d'au moins 10 m$^2$/g, de préférence d'au moins

30 m$^2$/g, encore plus préférentiellement d'au moins 70 m$^2$/g.

Cette surface spécifique est une surface mesurée par la méthode BET. On entend par surface mesurée par la méthode BET, la surface spécifique déterminée par adsorption d'azote conformément à la norme ASTM D 3663-78 établie à partir de la méthode BRUNAUER - EMMETT - TELLER décrite dans le périodique "The Journal of the American Society", 60, 309 (1938).

Cette alumine présente également, en général, un volume poreux total (VPT) d'au moins 0,1 cm$^3$/g, de préférence d'au moins 0,3 cm$^3$/g, encore plus préférentiellement d'au moins 0,5. Ce volume poreux total est mesuré de la façon suivante : on détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$\frac{1}{Dg} - \frac{1}{Da}.$$

Les procédés de préparation des alumines présentant les caractéristiques de volume poreux total et de surface spécifique nécessaires à la mise en oeuvre du procédé selon l'invention sont connus de l'homme du métier.

En ce qui concerne la surface spécifique, celle-ci peut notamment être contrôlée par la température de calcination (ou activation) de l'alumine suite à sa mise en forme.

Pour le volume poreux, son contrôle tient essentiellement au choix de l'alumine de départ utilisée pour la mise en forme et aux conditions opératoires de mise en forme de l'alumine. L'homme du métier connaît ces conditions.

Il est possible d'utiliser une alumine comprenant au moins un composé d'un élément choisi dans le groupe comprenant les alcalins et les alcalino-terreux, notamment Na$_2$O, cependant il est préférable que la teneur en ce composé soit d'au plus 5 % en poids, de préférence d'au plus 2. Il a en effet été observé que l'adsorption peut être moins efficace lorsque l'alumine comprend ces alcalins ou alcalino-terreux en teneur trop élevée.

Selon une première variante préférée, l'alumine se présente sous la forme de billes mises en forme par technologie tournante ou de concassés dont le volume de pores de diamètre supérieur à 100 Å (V$_{100Å}$) est d'au moins 0,05 cm$^3$/g, de préférence d'au moins 0,2 cm$^3$/g, encore plus préférentiellement d'au moins 0,35 cm$^3$/g.

Le volume V$_{100Å}$ est mesuré par la technique de la pénétration du mercure dans laquelle on applique la loi de Kelvin.

La mise en forme par technologie tournante est une agglomération de l'alumine réalisée par mise en contact et rotation de l'alumine sur elle-même. Comme appareil utilisé à cet effet, on peut citer le drageoir tournant, le tambour tournant.

Ce type de procédé permet d'obtenir des billes de dimensions et de répartitions de pores contrôlées, ces dimensions et ces répartitions étant, en général, créées pendant l'étape d'agglomération.

La porosité peut être créée par différents moyens comme le choix de la granulométrie de la poudre d'alumine ou l'agglomération de plusieurs poudres d'alumine de différentes granulométries. Une autre méthode consiste à mélanger à la poudre d'alumine, avant ou pendant l'étape d'agglomération, un composé, appelé porogène, disparaissant totalement par chauffage et créant ainsi une porosité dans les billes.

Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés est déterminée par le volume poreux désiré.

La poudre d'alumine utilisée comme matière de départ peut être obtenue par des procédés classiques tels que le procédé par précipitation ou gel, et le procédé par déshydratation rapide d'un hydroxyde d'alumine tel que l'hydrate de Bayer (hydrargillite). Cette dernière alumine est notamment obtenue par déshydratation rapide d'hydrargillite à l'aide d'un courant de gaz chauds, la température d'entrée des gaz dans l'appareillage variant généralement de 400 à 1200 °C environ, le temps de contact de l'alumine avec les gaz chauds étant généralement compris entre une fraction de seconde et 4-5 secondes ; un tel procédé de préparation de poudre d'alumine a particulièrement été décrit dans le brevet FR-A-1 108 011. Cette dernière alumine est celle préférée de l'invention.

Le contrôle des volumes des pores de diamètre donné peut également être réalisé au cours de cette étape d'agglomération par un réglage adéquat du débit d'introduction de la poudre d'alumine et éventuellement d'eau, de la vitesse de rotation de l'appareil ou par l'introduction d'une amorce de mise en forme.

Suite à cette agglomération, les billes obtenues peuvent être soumises à différentes opérations destinées à améliorer leur résistance mécanique telles qu'un mûrissement par maintien dans une atmosphère à taux d'humidité contrôlée, suivi d'une calcination puis d'une imprégnation des billes par une solution d'un ou plusieurs acides et un traitement hydrothermal en atmosphère confinée. Enfin, les billes sont séchées et calcinées de manière à être activées.

Selon une deuxième variante préférée, l'alumine se présente sous la forme d'extrudés ou de billes issues d'un procédé de mise en forme par coagulation en gouttes dont le volume de pores de diamètre supérieur à 50 Å

($V_{50Å}$) est d'au moins 0,3 cm$^3$/g, de préférence d'au moins 0,4 cm$^3$/g, encore plus préférentiellement d'au moins 0,5 cm$^3$/g.

Le volume $V_{50Å}$ est mesuré par la technique de la pénétration du mercure dans laquelle on applique la loi de Kelvin.

La mise en forme par coagulation en gouttes consiste à introduire des gouttes d'une solution aqueuse à base d'un composé de l'aluminium dans un liquide non miscible à l'eau (pétrole, kérosène, ...) de telle façon que les gouttes forment des particules sensiblement sphériques, ces particules sont coagulées simultanément et/ou postérieurement à la mise en forme sphéroïdale par un agent gélifiant. Les billes sont ensuite récupérées puis séchées et calcinées.

Ce type de billes peut par exemple être préparé, selon le procédé décrit dans le brevet EP-A-097 539, par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant. Ladite phase organique peut en particulier être un hydrocarbure, l'agent surfactant ou émulsionnant est par exemple du Galoryl EM 10®.

Ces billes peuvent également être préparées selon le procédé décrit dans le brevet EP-A-015 801 par mélange à un pH inférieur à 7,5 d'un sol de boehmite ultrafine et de particules sphéroïdales d'alumine, puis coagulation en goutte de ce mélange comme indiqué précédemment, et enfin séchage et calcination.

L'alumine peut également se présenter sous forme d'extrudés d'alumine. Ceux-ci sont généralement obtenus par malaxage puis extrusion d'une matière à base d'alumine, et enfin calcination. La matière de départ peut être de nature très variée : elle peut être issue de la déshydratation partielle et rapide d'hydrargillite, selon l'enseignement de la demande FR-A-1.108.011, ou de la précipitation d'alumine boehmite, pseudo-boehmite, bayerite ou d'un mélange de ces alumines. Au cours du malaxage, l'alumine peut être mélangée à des additifs, notamment des porogènes tels que définis ci-dessus.

Ces extrudés peuvent présenter toutes sortes de formes : cylindres pleins ou creux, multilobes, ...

Les alumines activées Sphéralite 521, Sphéralite 569, Sphéralite 537, Sphéralite 517 ou Sphéralite 513 commercialisées par Procatalyse conviennent parfaitement à la mise en oeuvre de l'invention.

Quel que soit le mode utilisé, l'alumine peut être dopée par au moins un des éléments choisis parmi les alcalins, les alcalino-terreux, les terres rares, le vanadium, le niobium, le tantale, le chrome, le molybdène, le tungstène, le fer, le cobalt, le nickel, le cuivre, le zinc, le ruthénium, le palladium, le gallium et le zirconium. Les composés de ces éléments présents dans la composition de l'adsorbant à base d'alumine et/ou de dioxyde de titane peut représenter jusqu'à 30 % en poids de l'adsorbant total.

Cependant, dans le cas où l'adsorbant ne comprend que de l'alumine et où l'élément dopant est un alcalin ou un alcalino-terreux, il est préférable de respecter une teneur maximum de 5 % en poids ainsi qu'indiqué précédemment.

Cependant, le procédé qui met en oeuvre uniquement de l'alumine est préféré.

Les composés organophosphorés pouvant être éliminés selon le procédé de l'invention peuvent être choisis parmi : les phosphines, les phosphinites, les phosphonites, les phosphites, les phosphinates, les phosphonates, les phosphates.

Il peut s'agir notamment des composés suivants : le tertio butylphénylène tolyl phosphite, l'isopropylditolylphosphinite, l'isopropylditolylphosphonite, les triaryl phosphites, le diaryl phosphites, de composés organophosphorés du type phosphonate tels que par exemple le dibutylbutylphosphonate (DBBP), le bis-(éthyl-2hexyl)(éthyl-2hexyl)phosphonate (DHEHP), le tétra-éthyl-butylène-diphosphonate : (C$_2$H$_5$O)$_2$-OP-CH$_2$-(CH$_2$)$_2$-CH$_2$-PO(OC$_2$H$_5$)$_2$, le tétra-isopropyl-méthyl-méthylène-diphosphonate : (iC$_3$H$_7$O)$_2$OP-CH(CH$_3$)-PO(iC$_3$H$_7$)$_2$, le tétra-éthyl-décilène-diphosphonate : (C$_2$H$_5$O)$_2$-OP-CH$_2$-(CH$_2$)$_8$-CH$_2$-PO(OC$_2$H$_5$)$_2$, le dipentylpentylphosphonate (DPPP), le diéthyldodécylphosphonate, de composés organophosphorés du type phosphinate tels que par exemple le dioctylméthylphosphinate, d'oxydes de phosphine comme par exemple les oxydes de di-n-hexylméthoxyoctylphosphine (DHMOPO), de tri-n-butylphosphine (TBPO), de trioctylphosphine (TOPO).

En général, le procédé est mené à température ambiante. Cependant, un chauffage peut être utilisé.

Le procédé selon l'invention convient, par exemple, pour traiter les composés nitriles ou dinitriles comprenant des impuretés organophosphorés.

Le procédé de l'invention convient particulièrement pour traiter un liquide provenant de la réaction d'hydrocyanation du butadiène en présence de catalyseurs phosphorés.

L'alumine convient parfaitement pour éliminer ces traces d'organophosphoré du milieu réactionnel.

Les exemples suivants illustrent l'invention sans toutefois en limiter la portée.

**EXEMPLES**

Le tableau 1 résume les caractéristiques des alumines utilisées.

Tableau 1

| Alumine | Mise en forme | surface spécifique ($m^2$/g) | V50Å ($cm^3$/g) | V100Å ($cm^3$/g) | Taux Na2O (ppm) |
|---------|---------------|------------------------------|------------------|-------------------|------------------|
| A | billes | 325 | 0,165 | 0,064 | 3250 |
| B | billes | 185 | 0,548 | 0,381 | 600 |
| C | billes | 208 | 0,904 | 0,706 | 690 |
| D | billes | 145 | 1,073 | 0,974 | 500 |
| E | extrudés | 211 | 0,621 | 0,380 | 10 |
| F | billes | 252 | 0,201 | 0,071 | 20000 |

**Exemple 1**

On dissout dans un bêcher du ditolylphosphite (($toIO)_2POH$) dans 20 g de 1,4-dicyanobutène jusqu'à une concentration massique de 750 ppm, exprimée en élément phosphore.

On place 1 g d'alumine dans un trépied-nacelle en verre puis on la traite durant 2 heures à 300°C sous courant d'azote sec. La nacelle est ensuite plongée dans le bêcher de ditolylphosphite et de 1,4-dicyanobutène sans que l'alumine soit mise au contact de l'air ambiant pour éviter la réhydratation parasite.

Le bêcher est laissé sous agitation à température ambiante durant un temps compris entre 2 et 96 heures.

En fonction du temps de contact entre l'alumine et le milieu, on réalise un dosage du taux de phosphore encore présent dans la solution de manière à estimer l'avancement de la réaction d'adsorption des composés phosphorés par l'alumine. On réalise également le dosage du phosphore à la surface de l'alumine, une fois l'alumine égouttée. Les deux méthodes de dosage sont concordantes.

Dans le tableau 2, on donne, pour chaque alumine et en fonction du temps de réaction, le pourcentage de composés phosphorés captés par l'alumine.

Tableau 2

| Temps (h) | Alumine | | | | | |
|-----------|---------|---------|---------|---------|---------|---------|
| | A | B | C | D | E | F |
| 0 | 0% | 0% | 0 % | 0% | 0 % | 0% |
| 2 | 10,6 % | 19.0 % | 27,6 % | 30,2% | 29,5 % | 10,1 % |
| 5 | 22,4 % | 32,6 % | 51,1 % | 54,1 % | 53,6 % | 20,4 % |
| 8 | 26,1 % | 52,4 % | 63,2 % | 69,9 % | 69,7 % | 24,0 % |
| 24 | 46,5 % | 76,5 % | 87,0 % | 87,5 % | 87,8 % | 42,1 % |
| 48 | 56,1 % | 87,8 % | 97,5 % | 97,4 % | 97,2 % | 51,1 % |
| 72 | 64,4 % | 93,2 % | 98,8 % | 99,0 % | 99,4 % | 59,6 % |
| 96 | 73,1 % | 95,7 % | 100 % | 100 % | 100 % | 66,2 % |

**Exemple 2**

On répète la mise en oeuvre de l'exemple 1 sur une solution de 200 g d'adiponitrile comprenant 730 ppm en masse de ditolylphosphinite exprimée en élément phosphore. On utilise 9,2 g d'alumine C.

Les résultats sont rassemblés dans le tableau 3.

Tableau 3

| Temps (h) | % d'adsorption |
|-----------|----------------|
| 0 | 0 |
| 6 | 56,7 |
| 36 | 94,1 |

Tableau 3   (suite)

| Temps (h) | % d'adsorption |
|-----------|----------------|
| 84 | 99,8 |

**Exemple 4**

On répète la mise en oeuvre de l'exemple 1 sur une solution de 30 ml de toluène comprenant 800 ppm en masse d'un composé pentavalent diphosphoré $((PhO)_2P(O)OH)$ exprimée en élément phosphore. On utilise 1,4 g d'alumine D.
Les résultats sont rassemblés dans le tableau 4.

Tableau 4

| Temps (h) | % d'adsorption |
|-----------|----------------|
| 0 | 0 |
| 3 | 41,2 |
| 6 | 61,0 |
| 9 | 73,9 |

**Revendications**

**1.**   Procédé d'élimination sélective de composés organophosphorés, trivalents et/ou pentavalents et comprenant au moins un atome de carbone, contenus dans un liquide contenant des composés nitriles ou dinitriles provenant de la réaction d'hydrocyanation du butadiène en présence de catalyseurs phosphorés, on adsorbe lesdits composés organophosphorés avec de l'alumine par mise en contact de ladite alumine avec ledit liquide.

**2.**   Procédé selon la revendication 1 **caractérisé en ce que** l'alumine présente une surface spécifique d'au moins 70 m2/g, mesurée par adsorption d'azote selon la norme ASTM D 3663-78.

**3.**   Procédé selon la revendication 1 ou 2, **caractérisé en ce que** l'alumine présente un volume poreux d'au moins 0,5 cm3/g mesuré par la méthode pycnométrique au mercure et à l'hélium.

**4.**   Procédé selon l'une quelconque des revendications précédentes, **caractérisé en ce que** l'alumine comprend au moins un composé d'un élément choisi dans le groupe comprenant les alcalins et les alcalino-terreux, dans une teneur d'au plus 2 % en poids.

**5.**   Procédé selon l'une quelconque des revendications précédentes, **caractérisé en ce que** l'alumine se présente sous la forme de billes, fabriquées par technologie tournante, ou de concassés dont le volume de pores de diamètre supérieur à 100 A est d'au moins 0,35 cm3/g mesuré par la technique de la pénétration du mercure dans laquelle on applique la loi de Kelvin.

**6.**   Procédé selon l'une quelconque des revendications précédentes, **caractérisé en ce que** l'alumine se présente sous la forme d'extrudés ou de billes issues d'un procédé de mise en forme par coagulation en gouttes dont le volume de pores de diamètre supérieur à 50 A est d'au moins 0,5 cm3/g mesuré par la technique de la pénétration du mercure dans laquelle on applique la loi de Kelvin

**7.**   Procédé selon l'une quelconque des revendications précédentes, **caractérisé en ce que** l'alumine est dopée par au moins un des éléments choisis parmi les alcalins, les alcalino-terreux, les terres rares, le vanadium, le niobium, le tantale, le chrome, le molybdène, le tungstène, le fer, le cobalt, le nickel, le cuivre, le zinc, le ruthénium, le palladium, le gallium et le zirconium.

**8.**   Procédé selon l'une quelconque des revendications précédentes, **caractérisé en ce que** les composés organophosphorés sont choisis parmi : les phosphines, les phosphinites, les phosphites, les phosphonites, les phosphinates, les phosphonates.

9. Procédé selon l'une quelconque des revendications précédentes, **caractérisé en ce que** les composés organophosphorés sont choisis parmi : le tertio butylphénylène tolyl phosphite, l'isopropylditolylphosphinite, l'isopropylditolylphosphonite, les triaryl phosphites, le diaryl phosphites.

**Patentansprüche**

1. Verfahren zur selektiven Entfernung von trivalenten und/oder pentavalenten Organophosphorverbindungen umfassend mindestens ein Kohlenstoffatom, enthalten in einer Flüssigkeit, enthaltend Nitril oder Dinitrilverbineungen, die ihrerseits aus der Reaktion der Hydrocyanierung von Butadien in Anwesenheit von Phosphorkatalysatoren stammen, wobei man die genannten Organophosphorverbindungen mit Aluminiumoxid durch das In-Kontakt-Bringen des genannten Aluminiumoxids mit der genannten Flüssigkeit adsorbiert.

2. Verfahren nach Anspruch 1, **dadurch gekennzeichnet, daß** das Aluminiumoxid eine spezifische Oberfläche von mindestens 70 m$^2$/g aufweist, gemessen durch Adsorption von Stickstoff gemäß der Norm ASTM D 3663-78.

3. Verfahren nach Anspruch 1 oder 2, **dadurch gekennzeichnet, daß** das Aluminiumoxid ein Porenvolumen von mindestens 0,5 cm$^3$/g aufweist, gemessen nach der pyknometrischen Methode mit Quecksilber und Helium.

4. Verfahren nach einem der vorstehenden Ansprüche, **dadurch gekennzeichnet, daß** das Aluminiumoxid mindestens eine Verbindung eines Elementes mit einem Gehalt von höchstens 2 Gew.-%,ausgewählt aus der Gruppe umfassend die Alkalien und die Erdalkalien, umfaßt.

5. Verfahren nach einem der vorstehenden Ansprüche, **dadurch gekennzeichnet, daß** das Aluminiumoxid in Form von Kügelchen, hergestellt durch Drehtechnologie, oder Bruchstücken vorliegt, deren Porenvolumen des Durchmessers von über 100 Å mindestens 0,35 cm$^3$/g beträgt, gemessen durch die Technik des Eindringens von Quecksilber, bei der man das Gesetz von Kelvin anwendet.

6. Verfahren nach einem der vorstehenden Ansprüche, **dadurch gekennzeichnet, daß** das Aluminiumoxid in Form von Extrudaten oder Kügelchen vorliegt, die von einem Verfahren zur Formgebung durch Koagulation in Tropfen stammen, deren Porenvolumen des Durchmessers von über 50 Å mindestens 0,5 cm$^3$/g beträgt, gemessen durch die Technik des Eindringens von Quecksilber, bei der man das Gesetz von Kelvin anwendet.

7. Verfahren nach einem der vorstehenden Ansprüche, **dadurch gekennzeichnet, daß** das Aluminiumoxid durch mindestens ein Element dotiert ist, ausgewählt unter den Alkalien, den Erdalkalien, den Seltenen Erden, Vanadium, Niobium, Tantal, Chrom, Molybdän, Wolfram, Eisen, Cobalt, Nickel, Kupfer, Zink, Ruthenium, Palladium, Gallium und Zirkonium.

8. Verfahren nach einem der vorstehenden Ansprüche, **dadurch gekennzeichnet, daß** die Organophosphorverbindungen ausgewählt werden unter den Phosphinen, den Phosphiniten, den Phosphiten, den Phosphoniten, den Phosphinaten, den Phosphonaten.

9. Verfahren nach einem der vorstehenden Ansprüche, **dadurch gekennzeichnet, daß** die Organophosphorverbindungen ausgewählt werden unter tert.-Butylphenylen-tolyl-phosphit, Isopropylditolylphosphinit, Isopropylditolylphosphonit, den Triaryl-phosphiten, den Diaryl-phosphiten.

**Claims**

1. Process for selective disposal of trivalent and/or pentavalent organophosphorus compounds which comprise at least one carbon atom and are contained in a liquid containing nitrile or dinitrile compounds originating from the hydrocyanation reaction of butadiene in the presence of catalysts containing phosphorus, where the said organophosphorus compounds are adsorbed with alumina by bringing the said alumina into contact with the said liquid.

2. Process according to Claim 1, **characterized in that** the alumina has a specific surface of at least 70 m$^2$/g, measured by adsorption of nitrogen according to standard ASTM D 3663-78.

3. Process according to Claim 1 or 2, **characterized in that** the alumina has a pore volume of at least 0.5 cm$^3$/g,

measured by the pychometric method with mercury and helium.

4. Process according to any one of the preceding claims, **characterized in that** the alumina comprises at least one compound of an element selected from the group comprising the alkaline metals and the alkaline-earth metals, in a proportion of at most 2% by weight.

5. Process according to any one of the preceding claims, **characterized in that** the alumina is in the form of beads manufactured by rotary technology, or in a crushed form in which the pore volume corresponding to a diameter in excess of 100 Å is at least 0.35 cm$^3$/g, measured by the mercury penetration technique in which Kelvin's law is applied.

6. Process according to any one of the preceding claims, **characterized in that** the alumina is in the form of extrudates or beads resulting from a formation process involving drop coagulation, in which the pore volume corresponding to a diameter in excess of 50 Å is at least 0.5 cm$^3$/g, measured by the mercury penetration technique in which Kelvin's law is applied.

7. Process according to any one of the preceding claims, **characterized in that** the alumina is doped with at least one of the elements selected from the alkaline metals, the alkaline-earth metals, the rare earths, vanadium, niobium, tantalum, chromium, molybdenum, tungsten, iron, cobalt, nickel, copper, zinc, ruthenium, palladium, gallium and zirconium.

8. Process according to any one of the preceding claims, **characterized in that** the organophosphorus compounds are selected from: phosphines, phosphinites, phosphites, phosphonites, phosphinates and phosphonates.

9. Process according to any one of the preceding claims, **characterized in that** the organophosphorus compounds are selected from: tert-butyl phenylenetolylphosphite, isopropyl ditolylphosphinite, isopropyl ditolylphosphonite, triaryl phosphites and diaryl phosphites.